# EUROPÄISCHE PATENTSCHRIFT

(11) **EP 3 233 489 B1**
(45) Veröffentlichungstag und Bekanntmachung des Hinweises auf die Patenterteilung: **18.11.2020**
(21) Anmeldenummer: 15813328.0
(22) Anmeldetag: 15.12.2015
(51) Int. Cl.: B32B 27/12, B32B 1/08, F16L 55/165, B32B 5/02

(54) **AUSKLEIDUNGSSCHLAUCH ZUR SANIERUNG FLUIDFÜHRENDER SYSTEME**
LINING TUBE FOR THE RENOVATION OF FLUID-CONDUCTING SYSTEMS
CHEMISE DESTINÉE À LA RÉNOVATION DE SYSTÈMES CONDUISANT DES FLUIDES

(30) Priorität: 15.12.2014 DE 102014118689
(43) Veröffentlichungstag der Anmeldung: 25.10.2017
(73) Patentinhaber: RelineEurope AG, 76865 Rohrbach (DE)
(72) Erfinder: REICHEL, Stefan, 67098 Bad Dürkheim (DE); NOLL, Christian, 67117 Limburgerhof (DE)
(74) Vertreter: Dr. Langfinger & Partner
(86) Internationale Anmeldenummer: PCT/EP2015/079674
(87) Internationale Veröffentlichungsnummer: WO 2016/096773

(56) Entgegenhaltungen:
- EP-A1- 0 100 029
- US-A1- 2005 194 718
- US-A1- 2008 271 802

## Beschreibung

Die Erfindung betrifft einen Auskleidungsschlauch zur Sanierung fluidführender Systeme mit mindestens einem harzgetränkten Faserschlauch.

Auskleidungsschläuche zur Sanierung fluidführender Systeme sind an sich bekannt und in der Literatur beschrieben.

In der Praxis bewährt haben sich zu diesem Zweck sogenannte Liner auf der Basis thermoplastischer Kunststoffe mit Faserverstärkung. Dabei handelt es sich um flexible Auskleidungsschläuche, die in das zu sanierende Leitungssystem eingeführt, anschließend an der inneren Oberfläche des zu sanierenden Leitungssystems zur Anlage gebracht werden und schließlich durch Aushärtung des im Faserschlauch enthaltenen Harzes in die endgültige Form gebracht werden.

Die Herstellung derartiger Auskleidungsschläuche ist beispielsweise in der WO 95/04646 beschrieben. Nach dem dort beschriebenen Verfahren wird auf einen Wickeldorn, der aus mehreren parallelen, in ihrem Abstand zur Wickeldornachse veränderbaren Wickelfingern besteht, zunächst ein Folienband schraubenförmig gewickelt, wobei ein als Schutzfolie dienender Innenfolienschlauch gebildet wird. Auf den so erhaltenen Innenfolienschlauch wird mindestens ein harzgetränktes Faserband gewickelt und darauf wiederum ein zweites Folienband, welches einen Außenfolienschlauch bildet.

Härtbare Polymere mit nanopartikulären Füllstoffen wurden in der Literatur für verschiedene Anwendungen beschrieben.

So werden in der EP A 1502727 Verbundformteile beschrieben, die durch Injektion eines niedrigviskosen Kunststoffs in einen Faserträger und anschließendes Aushärten durch Erhitzen hergestellt werden. Vor der Injektion werden dem niedrigviskosen Kunststoff Nanopartikel zugesetzt. Es handelt sich dabei um sogenannte Prepregs, die nach Aushärten nicht mehr flexibel sind. Eine Verwendung in Auskleidungsschläuchen zur Sanierung fluidführender Systeme ist weder beschrieben noch nahegelegt.

Gegenstand der EP A 1 634 921 und der EP A 1 786 866 sind polymere Zusammensetzungen, die neben einem ungesättigten Polyester und einem weiteren Copolymer mit gegenüber dem Polyester reaktiven Gruppen noch Nanopartikel als Füllstoffe enthalten. Aus diesen Zusammensetzungen können Verbundwerkstoffe, Beschichtungen, Vergußmassen, Klebstoffe und Dentalmaterialien mit verbesserten mechanischen Eigenschaften, insbesondere verbesserter Schlagfestigkeit erhalten werden.

In der US 2010/0143701 wird ein Verfahren beschrieben, bei dem Kohlenstoff-Nanoröhrchen (carbon nanotubes), die in einem Lösungsmittel dispergiert sind, auf eine faserförmige Oberfläche aufgebracht werden, anschließend das Lösungsmittel verdampft und schließlich die so erhaltene beschichtete Oberfläche mit einem Polymer überzogen wird, um einen faserverstärkten Verbundwerkstoff mit eingebetteten Kohlenstoff-Nanoröhrchen zu erhalten.

WO A 2005/028174 betrifft die Herstellung von Polymercomposites auf Epoxydharzbasis, die funktionalisierte Kohlenstoff-Nanoröhrchen enthalten.

Die US 2008/0271802 beschreibt rohrförmige Materialien zur Sanierung von Rohrleitungen mit einem harzgetränkten Filz mit im Tränkharz des Filzes eingebetteten Kohlenstoff-Nanoröhrchen in einer Menge von 0,5 bis 30 Gew%.

Aus der US 2005/0194718 sind Auskleidungsschläuche (Liner) zur Sanierung von Leitungen enthaltend ein harzabsorbierendes Material und eine im wesentlichen undurchlässige Beschichtung bekannt, wobei die Beschichtung ein modifiziertes Polymer mit mindestens einem zugesetzten Additiv aufweist, wobei der Reibungskoeffizient des modifizierten Polymers niedriger als der des reinen Polymers ohne Additiv.

Aus der EP A 100029 ist ein beschichteter Verbundwerkstoff bekannt, bestehend aus einem Schichtenverbund aus einer Reaktivharzaufnehmenden textilen Schicht und einer auf der textilen Schicht aufgebrachten gas- und wasserundurchlässigen mindestens zweilagigen Schicht von untrennbar miteinander verbundenen Polyurethan-Harnstoff-Reaktivbeschichtungen, die Füllstoffe enthalten kann. Der Verbundwerkstoff kann zur Sanierung von Durchlässen eingesetzt werden.

Der vorliegenden Erfindung lag die Aufgabe zu Grunde, Auskleidungsschläuche zur Sanierung fluidführender Systeme zur Verfügung zu stellen, die vorteilhafte mechanische Eigenschaften und eine abrasionsbeständige Oberfläche aufweisen.

Diese Aufgabe wird erfindungsgemäß mit Auskleidungsschläuchen gemäß Anspruch 1 gelöst. Bevorzugte Ausführungsformen der erfindungsgemäßen Auskleidungsschläuche sind den Unteransprüchen und der nachfolgenden detaillierten Beschreibung zu entnehmen.

Ein weiterer Aspekt der Erfindung betrifft ein Verfahren zur Herstellung der erfindungsgemäßen Auskleidungsschläuche und die Verwendung der erfindungsgemäßen Auskleidungsschläuche zur Sanierung von Wasser- und Abwasser-Leitu ngssystemen.

Unter fluidführenden Systemen im Sinne der vorliegenden Erfindung sind sämtliche Systeme zu verstehen, in denen Fluide, das heißt Flüssigkeiten oder Gase transportiert werden können. Es gibt keine besonderen Beschränkungen hinsichtlich Bauform, Durchmesser oder Material der zu sanierenden Systeme.

Die Materialwahl wird bestimmt durch die in den Systemen zu transportierenden fluiden Medien; deren Eigenschaften bestimmen letztlich auch die Standzeiten solcher Systeme und das Erfordernis einer Sanierung, die mit den erfindungsgemäßen Auskleidungsschläuchen vorgenommen werden kann.

Gegenstand der Erfindung ist demgemäß ein Auskleidungsschlauch zur Sanierung fluidführender Systeme, enthaltend mindestens einen harzgetränkten Faserschlauch, einen verstärkten oder unverstärkten inneren Folienschlauch auf der dem fließenden Medium zugewandten Seite des harzgetränkten Faserschlauchs, wobei dem zur Tränkung verwendeten Harz oder dem inneren Folienschlauch oder beiden 0,1 bis 40 Gew%, bezogen auf das Gewicht des Harzes bzw. das Gewicht des inneren Folienschlauchs, an Nanopartikeln zugesetzt sind, die zum Zeitpunkt der Einarbeitung in das zur Tränkung verwendete Harz eine mittlere Teilchengröße D₅₀ oder eine größte Dimension in einer Raumrichtung von weniger als 300 nm haben und der Auskleidungsschlauch weiter einen äußeren Folienschlauch aufweist. Dies bedeutet, dass entweder das zur Tränkung verwendete Harz 0,1 bis 40 Gew%, bezogen auf das Gesamtgewicht des Harzes, an Nanopartikel enthalten kann oder dass ein innerer Folienschlauch 0,1 bis 40 Gew%, bezogen auf das Gesamtgewicht des Folienschlauchs, an Nanopartikeln enthalten kann oder aber dass Nanopartikel in beiden genannten Komponenten in der angegebenen Menge enthalten sein können. Bevorzugt ist, dass Nanopartikel in dem Faserschlauch enthalten sind, der in eingebautem Zustand mit dem strömenden Medium in direkten Kontakt kommt. Dies kann der innere Folienschlauch sein, wenn dieser nach Einbau im Auskleidungsschlauch verbleibt oder aber der harzgetränkte Faserschlauch, wenn der innere Folienschlauch nach dem Einbau entfernt wird.

Unter dem Begriff Nanopartikel sind im Rahmen der vorliegenden Erfindung alle partikel- oder faserförmigen Teilchen zu verstehen, deren größte Dimension in einer oder mehreren Raumrichtungen bzw. bei sphärischen oder kugelförmigen Partikeln deren mittlerer Durchmesser weniger als 300 nm, vorzugsweise weniger als 150 nm und insbesondere weniger als 100 nm beträgt.

Der Begriff mittlerer Teilchendurchmesser, wie er im Rahmen der vorliegenden Erfindung verwendet wird, bezieht sich auf den mittleren Durchmesser D₅₀ auf der Basis der intensitätsgewichteten Teilchengrößenverteilung wie er nach dem sogenannten Contin-Daten-Inversions Algorithmus erhalten wird. D₅₀ teilt die intensitätsgewichtete Teilchengrößenverteilung in zwei gleiche Fraktionen, von denen die erste Teilchen mit einem Durchmesser unterhalb D₅₀ und die zweite Teilchen mit einem Durchmesser oberhalb D₅₀ enthält.

D₅₀ wird im allgemeinen durch dynamische Lichtstreuung nach ISO 22412:2008 bestimmt. Die Bestimmung wird bei einer Temperatur von 25°C durchgeführt. Der Brechungsindex und der Viskositätskoeffizient des Dispersionsmedium sollten möglichst genau bestimmt werden oder aus der Literatur bekannt sein. Nach einer Temperaturkalibrierung wird die Position der Meßzelle zur Erzielung eines optimalen Streusignals justiert. Details zur Messung sind der genannten ISO-Norm zu entnehmen.

Sphärische oder kugelförmige Teilchen haben eine mehr oder weniger ausgeprägte isometrische Struktur, d.h. die Dimensionen in allen drei Raumrichtungen sind vergleichbar.

Das Verhältnis der Dimensionen eines Partikels in unterschiedlichen Raumrichtungen wird durch das sogenannte Aspektverhältnis charakterisiert, welches das größte Verhältnis der Dimension eines Partikels in zwei unterschiedlichen Raumrichtungen beschreibt. Das Aspektverhältnis von ideal kugelförmigen Teilchen ist demzufolge 1, während es bei faser- oder plättchenförmigen Teilchen in der Regel erheblich größer als 1 ist und oft Werte von 100 oder mehr erreicht. Plättchen- oder faserförmige Nanopartikel werden daher durch die Angabe der Größe in der Raumrichtung gekennzeichnet, in der das entsprechende Teilchen die größte Abmessung aufweist.

Grundsätzlich eignen sich als Nanopartikel alle Arten anorganischer oder organischer Produkte, die in entsprechenden Teilchengrößen hergestellt werden können und teilweise auch kommerziell im Handel erhältlich sind. Verfahren zur Herstellung solcher Nanopartikel sind dem Fachmann bekannt und in der Literatur beschrieben.

Sphärische oder kugelförmige Füllstoffe sind beispielsweise Metalloxide, Metallcarbonate, Metallsulfate oder dergleichen. Bevorzugt sind Oxide von Ba, Al, Si, Zr, Ce und Ti und Mischoxide dieser Metalle. Als Carbonate oder Sulfate können hier bevorzugt die Carbonate bzw. Sulfate der Alkali- und Erdalkalimetalle genannt werden.

Plättchenförmige Füllstoffe sind z.B. in großer Vielzahl in Plastics Additive Handbook (Hanser Verlag, 5. Auflage) in Kapitel 17.4.2 auf den Seiten 926 bis 930 beschrieben, auf das hier wegen näherer Einzelheiten verweisen wird.

Nadelförmige oder aciculare Partikel sind ebenso in großer Vielzahl in der Literatur beschrieben worden. Bevorzugte aciculare Additive zur Verwendung in den zur Härtung verwendeten Harzen weisen ein Aspektverhältnis im Bereich von 2 bis 100, vorzugsweise von 2-20 auf.

Wollastonit, Xonotlit, Sepiolit, Attapulgit und Palygorskit können als bevorzugte aciculäre Partikel genannt werden.

Faserförmige Füllstoffe weisen noch höhere Aspektverhältnisse als nadelförmige Füllstoffe auf. Eine bevorzugte Gruppe von faserförmigen Nanopartikeln sind kohlenstoffbasierte Partikel, die auch unter der Bezeichnung Kohlenstoff-Nanoröhrchen bekannt sind.

Weitere geeignete faserförmige Nanopartikel, die hier erwähnt werden können, sind Glasfasern oder Fasern auf Basis von Al, Ti, Mg, Al-Silikat, Si- oder Borcarbidfasern. Glasfasern sind hierbei bevorzugt.

Die nanopartikulären Füllstoffe werden dem zur Tränkung der harzgetränkten Faserbänder verwendeten Harz bzw. dem inneren Folienschlauch in einer Menge von 0,1 bis 40, vorzugsweise von 2-30 und besonders bevorzugt von 3 bis 25 Gew%, bezogen auf das Gewicht des Harzes bzw. das Gewicht des inneren Folienschlauchs, zugesetzt.

Der Zusatz der Nanopartikel erfolgt zu dem zur Tränkung verwendeten Harz vor der Tränkung in an sich bekannter Weise, so dass sich nähere Angaben hier erübrigen.

Die vorstehend genannte Teilchengröße der Nanopartikel bezieht sich auf den Zeitpunkt der Einarbeitung in das zur Tränkung verwendete Harz. Durch Agglomeration im Verlauf der Zugabe oder während der Tränkung der harzgetränkten Faserschläuche mit dem Nanopartikel enthaltenden, zur Tränkung verwendeten Harz kann sich im fertigen Auskleidungsschlauch eine anderer, im Regelfall größerer Wert für die Teilchengröße ergeben.

Als Reaktionsharze zur Tränkung der Faserbänder werden vorzugsweise ungesättigte Polyesterharze (UP-Harze) oder Vinylesterharze (VE-Harze) verwendet, die beispielsweise in Styrol und/oder einem Acrylester gelöst sein können. Geeignete Reaktionsharze sind dem Fachmann bekannt und in verschiedenen Ausführungen im Handel kommerziell erhältlich.

Für die Herstellung von UP-Harzen werden mehrwertige ungesättigte Dicarbonsäuren mit Diolen verestert, wobei niedermolekulare Produkte erhalten werden, die bei der Aushärtung, in der Regel mit Vinylverbindungen (insbesondere Styrol) als Comonomeren zu hochmolekularen dreidimensionalen Netzwerken polymerisiert werden.

Als Säurekomponente von UP-Harzen können auch Mischungen von gesättigten und ungesättigten bifunktionellen Carbonsäuren bzw. deren Anhydride verwendet werden. So können als Säurekomponenten Adipinsäure, Glutarsäure, Phthalsäure, Isophthalsäure und Terephthalsäure sowie deren reaktive Derivate eingesetzt werden. Bevorzugte ungesättigte Säuren sind Maleinsäure oder deren Anhydrid, Fumarsäure und Diels-Alder-Addukte aus Maleinsäureanhydrid und Cyclopentadien. Als Diole werden vorzugsweise Ethylenglykol, Propandiol, Dipropandiol, Diethylenglykol, 2,2-Dimethyl-1,2-propandiol, 1,4-Butandiol, 2,2,4-Trimethyl-1,3-pentandiol oder Bisphenol A verwendet. Die zur Vernetzung der UP-Harze erforderlichen Comonomere können gleichzeitig Lösungsmittel für die niedermolekularen Oligomere sein; als Beispiel hierfür kann insbesondere Styrol genannt werden, welches in vielen UP-Harzen eingesetzt wird. Andere Beispiele für geeignete Comonomere sind Methylstyrol, Vinyltoluol oder Methylmethacrylat.

Bifunktionelle Monomere wie Diallylphthalat oder Divinylbenzol können ebenfalls zugesetzt sein.

Andere Bestandteile von UP-Harzen wie Härter, Polymerisationsinitiatoren, Beschleuniger, Weichmacher und dergleichen sind dem Fachmann bekannt und in der Literatur beschrieben, so dass hier weitere Ausführungen entbehrlich sind.

Vinylesterharze (auch als VE-Harze bezeichnet), eine weitere Gruppe zur Tränkung der Faserbänder geeigneter Harze, werden erhalten, indem man in einer ersten Stufe ein Epoxidoligomer herstellt, welches endständige Vinylestergruppen wie Acrylat- oder Methacrylatgruppen und damit reaktionsfähige Doppelbindungen aufweist. In einem zweiten Schritt erfolgt dann die Vernetzung, wobei in der Regel Styrol als Lösungs- und Vernetzungsmittel eingesetzt wird. Die Vernetzungsdichte von VE-Harzen ist im allgemeinen geringer als die von UP-Harzen, da weniger reaktionsfähige Doppelbindungen vorhanden sind.

Bei VE-Harzen weist das Grundgerüst des Oligomers bevorzugt aromatische Glycidylether von Phenolen oder epoxidierten Novolaken auf. Endständig sind diese vorzugsweise mit (Meth)acrylsäure verestert.

Die zur Tränkung der Faserbänder verwendeten Reaktionsharze können thermisch (üblicherweise durch Peroxidkatalysatoren) oder mittels Strahlung, z.B. durch UV-Licht mit Photoinitiatoren wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige Kombinationshärtung ist beispielsweise in der EP-A 1262708 beschrieben.

Nach dem Tränken kann das Harz zweckmäßigerweise eingedickt werden, wie es beispielsweise in der WO-A 2006/061129 beschrieben wird. Dadurch erhöht sich die Viskosität des Harzes und damit wird die Handhabbarkeit und Wickelbarkeit der verwandten Faserbänder verbessert.

Als Faserbänder, die mit dem Nanopartikel enthaltenden Reaktionsharz getränkt werden, sind in den Auskleidungsschläuchen gemäß der vorliegenden Erfindung grundsätzlich alle dem Fachmann bekannten Produkte in Form von Geweben, Gewirken, Gelegen, Matten oder Vliesen, die Fasern in Form von langen Endlosfasern oder kurzen Fasern enthalten können, verwendbar.

Entsprechende Produkte sind dem Fachmann an sich bekannt und in großer Vielfalt von verschiedenen Herstellern kommerziell erhältlich.

Unter Geweben werden dabei im Allgemeinen flächenförmige Textilerzeugnisse aus mindestens zwei rechtwinklig gekreuzten Fasersystemen verstanden, wobei die so genannte Kette in Längsrichtung und der so genannte Schuss senkrecht dazu verlaufen.

Unter Gewirken werden im allgemeinen Textilerzeugnisse verstanden, die durch Maschenbildung erzeugt werden.

Fasergelege sind eine Verarbeitungsvariante von Fasern, bei denen die Fasern nicht verwoben werden, sondern parallel zueinander ausgerichtet in eine chemische Trägersubstanz (die Matrix) eingebettet sind und im Regelfall durch Deckfolien von oben und unten und ggf. mittels eines Steppfadens oder eines Klebstoffes fixiert werden. Fasergelege weisen durch die parallele Ausrichtung der Fasern eine ausgeprägte Anisotropie der Festigkeiten Orientierungsrichtung und senkrecht dazu auf, was für manche Anwendungen von Interesse sein kann.

Ein Vlies besteht aus lose zusammen liegenden Fasern, welche noch nicht miteinander verbunden sind. Die Festigkeit eines Vlieses beruht nur auf der fasereigenen Haftung, kann aber durch Aufarbeitung beeinflusst werden. Damit man das Vlies verarbeiten und benutzen kann, wird es in der Regel verfestigt, wofür verschiedene Methoden angewandt werden können.

Vliese sind verschieden von Geweben, oder Gewirken, die sich durch vom Herstellverfahren bestimmte Legung der einzelnen Fasern oder Fäden auszeichnen. Vliese bestehen dagegen aus Fasern, deren Lage sich nur mit den Methoden der Statistik beschreiben lässt. Die Fasern liegen wirr im Vliesstoff zueinander. Die englische Bezeichnung *nonwoven* (nicht gewebt) grenzt sie dementsprechend eindeutig von Geweben ab. Vliesstoffe werden unter anderem nach dem Fasermaterial (z. B. das Polymer bei Chemiefasern), dem Bindungsverfahren, der Faserart (Stapel- oder Endlosfasern), der Faserfeinheit und der Faserorientierung unterschieden. Die Fasern können dabei definiert in einer Vorzugsrichtung abgelegt werden oder gänzlich stochastisch orientiert sein wie beim Wirrlagen-Vliesstoff.

Wenn die Fasern keine Vorzugsrichtung in ihrer Ausrichtung (Orientierung) haben, spricht man von einem isotropen Vlies. Sind die Fasern in einer Richtung häufiger angeordnet als in der anderen Richtung, dann spricht man von Anisotropie.

Im Rahmen der vorliegenden Erfindung sollen als Faserbänder im Sinne der Erfindung auch Filze verstanden werden. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen.

Nadelfilz wird mechanisch in der Regel mit zahlreichen Nadeln mit Widerhaken hergestellt, wobei die Widerhaken umgekehrt wie bei einer Harpune angeordnet sind. Dadurch werden die Fasern in den Filz gedrückt und die Nadel geht leicht wieder heraus. Durch wiederholtes Einstechen werden die Fasern miteinander verschlungen und anschließend eventuell chemisch oder mit Wasserdampf nachbehandelt.

Filze lassen sich - wie Vliese - aus praktisch allen natürlichen oder synthetischen Fasern herstellen. Neben der Vernadelung oder in Ergänzung ist auch das Verhaken der Fasern mit einem gepulsten Wasserstrahl oder mit einem Bindemittel möglich. Die letztgenannten Verfahren eignen sich insbesondere für Fasern ohne Schuppenstruktur wie Polyester- oder Polyamidfasern.

Filze weisen eine gute Temperaturbeständigkeit auf und sind in der Regel feuchtigkeitsabweisend, was insbesondere bei der Anwendung in flüssigkeitsführenden Systemen von Vorteil sein kann.

Bevorzugt werden für die erfindungsgemäßen Auskleidungsschläuche Glasfasergewebe oder Glasfasergelege verwendet.

Gemäß einer bevorzugten Ausführungsform weisen die erfindungsgemäßen Auskleidungsschläuche in radialer Richtung mindestens zwei übereinander gewickelte unterschiedliche harzgetränkte Faserbänder auf.

Gemäß einer bevorzugten Ausführungsform unterscheiden sich die mindestens zwei unterschiedlichen Faserbänder in mindestens einem der Parameter Fasereinbindung, Faserorientierung, Faserlänge oder Faserart.

Unter Fasereinbindung wird im Rahmen der vorliegenden Erfindung die Art verstanden, mit dem die Fasern in ein Trägermaterial eingebracht sind.

Die verwendeten Faserbänder werden so ausgewählt, daß der Auskleidungsschlauch einerseits ein für den jeweiligen Anwendungsfall optimiertes Eigenschaftsprofil aufweist und andererseits eine möglichst einfache Herstellbarkeit auf vorhandenen Vorrichtungen zur Herstellung solcher Auskleidungsschläuche möglich ist.

Durch die kombinierte Verwendung mehrerer unterschiedlicher Faserbänder mit unterschiedlichem Aufbau hinsichtlich Faserart, Faserlänge, Fasereinbindung oder Faserorientierung kann das Eigenschaftsprofil individuell auf die jeweilige Anwendung angepasst werden, ohne dass es hierzu aufwändiger Umbauarbeiten an den zur Herstellung verwendeten Vorrichtungen bedarf. Durch die Wahl der Reihenfolge, in der die mindestens zwei unterschiedlichen Faserbänder gewickelt werden, kann das radiale und longitudinale Profil der erfindungsgemäßen Auskleidungsschläuche individuell gestaltet und optimal an die konkrete Anwendung angepasst werden.

Die Länge der verwendeten Fasern unterliegt an sich keiner besonderen Beschränkung, d.h. es können sowohl sogenannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; ist jedoch eine besondere Hitzebeständigkeit von Bedeutung, können beispielsweise Aramidfasern oder Carbonfasern eingesetzt werden, die hinsichtlich der Festigkeit bei höheren Temperaturen Vorteile gegenüber Glasfasern bieten können.

In manchen Fällen hat es sich als vorteilhaft erwiesen, wenn ein erstes harzgetränktes Faserband ausgewählt wird aus Geweben, Gewirken, Gelegen, Matten, Filzen oder Vliesen, wobei die Länge der Fasern entsprechend der gewünschten Anwendung gewählt werden kann. Dabei kann z.B. das erste harzgetränkte Faserband ein Fasergelege aus parallel ausgerichteten Endlosfasern, vorzugsweise parallel ausgerichteten Endlos-Glasfasern sein. Vorteilhaft sind die Endlosfasern im wesentlichen senkrecht zur Längsrichtung des harzgetränkten Faserbandes ausgerichtet. Mit einem solchen ersten Faserband kann vorzugsweise ein zweites Faserband kombiniert werden, in dem Fasern in einer Wirrfasermatte ungerichtet angeordnet sind. Das erste Faserband verleiht dem Auskleidungsschlauch eine sehr gute Festigkeit in Längsrichtung, was beim Einbau in die zu sanierenden Leitungssysteme von Vorteil ist. Das zweite Faserband mit ungerichteten Fasern in Form einer Wirrfasermatte stabilisiert durch die hohe Harzaufnahme die innere Oberfläche und vermeidet Poren an der inneren Oberfläche, die bei längerem Kontakt mit aggressiven Medien zu Schäden führen könnten. Durch die Verwendung des gerichteten Fasergeleges wird andererseits das Risiko, dass die Fasermatte bei der Tränkung auseinander gezogen wird und es damit zu einer ungleichmäßigen Tränkung kommt, reduziert. Auch statische Erfordernisse an den Liner lassen diese Ausführung bevorzugt erscheinen.

Besonders vorteilhaft kann in einem ersten gewickelten harzgetränkten Faserband das Fasergelege bereits mit einer Wirrfasermatte vernadelt oder vernäht sein, d.h. das erste und auch die folgenden danach gewickelten Faserbänder können auch mehrschichtig aufgebaut sein. Als vorteilhaft hat sich hierbei in einigen Fällen bewährt, wenn mindestens eines der auf ein erstes Faserband gewickelten folgenden Faserbänder mehrschichtig dergestalt aufgebaut sind, dass zwischen zwei Schichten mit ungerichteten Fasern eine Zwischenschicht mit parallel zur Längsrichtung des Faserbandes angeordneten Schnittfasern enthalten sind, die vorzugsweise eine Länge im Bereich von 2 bis 60, vorzugsweise von 3 bis 30 cm aufweisen.

Gemäß einer besonders bevorzugten Ausführungsform weisen die erfindungsgemäßen Auskleidungsschläuche einen harzgetränkten Faserschlauch auf, der durch Wickeln mindestens eines Faserbands mit im wesentlichen senkrecht zur Längsrichtung des Faserbands orientierten Fasern und mindestens einem weiteren Faserband mit parallel zur Längsrichtung des Faserbandes orientierten Fasern hergestellt ist.

Gemäß einer dritten bevorzugten Ausführungsform wird ein Vlies, vorzugsweise aus Polyolefinfasern, besonders bevorzugt ein Polypropylen-Vlies als mindestens ein erstes harzgetränktes Faserband verwendet, welches mit einem beliebigen weiteren Faserband der vorstehend beschriebenen Arten kombiniert werden kann.

Schließlich wird gemäß einer vierten bevorzugten Ausführungsform als eines der Faserbänder ein Filz der vorstehend beschriebenen Art verwendet, welcher wiederum mit mindestens einem weiteren Faserband der vorstehend beschriebenen Art kombiniert werden kann.

Grundsätzlich ist es wie erwähnt möglich, beliebige Arten von Faserbändern zu kombinieren, die das für die geplante Anwendung angestrebte Eigenschaftsprofil bestmöglich erreichen. So können Faserbänder mit gleichartiger Fasereinbindung (also beispielsweise zwei Fasergelege oder zwei Fasergewebe) verwendet werden, die Fasern unterschiedlicher chemischer Zusammensetzung, unterschiedlicher Orientierung oder mit unterschiedlichen Längen enthalten. Beispielhaft können Kurzfasern in einem Faserband mit Langfasern in mindestens einem weiteren darauf gewickelten Faserband kombiniert werden oder es können Gewebe mit Vliesen, Matten oder Gewirken kombiniert werden. Auch die Verwendung zweier Fasergewebe mit Fasern gleicher Einbindungsart und gleicher Orientierung und Länge aber unterschiedlicher chemischer Zusammensetzung sind möglich. Damit eröffnet sich für den Fachmann eine große Variationsbreite innerhalb derer er die Eigenschaften des Auskleidungsschlauchs für die individuelle Anwendung quasi "maßschneidern" kann.

Vom gewünschten Eigenschaftsprofil ausgehend wählt der Fachmann die geeigneten Faserbänder für die erfindungsgemäßen Auskleidungsschläuche mit Hilfe seines Fachwissens über die Eigenschaften der verschiedenen Arten von Faserbändern aus und ist so in der Lage optimal an den individuellen Anwendungsfall angepasste Produkte zur Verfügung zu stellen.

Die Breite der Faserbänder unterliegt an sich keinen besonderen Beschränkungen; für eine Vielzahl von Anwendungen haben sich Faserbänder mit einer Breite von 20 bis 150, vorzugsweise von 30 bis 100 und insbesondere von 40 bis 80 cm als geeignet erwiesen.

Die Dicke der Faserbänder in den erfindungsgemäßen Auskleidungsschläuchen unterliegt ebenfalls keiner besonderen Beschränkung und wird durch die Dicke des Auskleidungsschlauchs für die gewünschte Anwendung bestimmt. Dicken der Faserbänder im Bereich von 0,01 bis 1, insbesondere 0,05 bis 0,5 mm haben sich in der Praxis bewährt.

Die erfindungsgemäßen Auskleidungsschläuche weisen einen ggf. verstärkten inneren Folienschlauch auf der Basis eines thermoplastischen Kunststoffs auf, der nach dem Einbau des Auskleidungsschlauchs entfernt werden oder im zu sanierenden Leitungssystem verbleiben kann. Dieser innere Folienschlauch enthält, falls dieser nach Einbau nicht entfernt wird, 0,1 bis 40 Gew%, bezogen auf das Gesamtgewicht des inneren Folienschlauchs, an Nanopartikeln wie sie vorstehend beschreiben wurden. Es ist auch möglich, dass sowohl der innere Folienschlauch als auch das zur Tränkung der Faserbänder verwendete Harz Nanopartikel enthalten.

Als thermoplastische Kunststoffe für den inneren Folienschlauch eignen sich prinzipiell alle Polymeren, die zu Folien bzw. Folienschläuchen der für den jeweiligen Anwendungsfall benötigten Dicke bzw. Stärke verarbeitet werden können. Falls die Aushärtung photochemisch erfolgt ist zusätzlich zu beachten, dass die Produkte eine ausreichende Durchlässigkeit für die Wellenlänge oder den Wellenlängenbereich der zur Härtung verwendeten Strahlung aufweisen. Falls der Innenfolienschlauch nach der Aushärtung im zu sanierenden System verbleiben soll, ist auch auf die ausreichende Stabilität gegenüber den transportierten Fluiden wie auch gegenüber dem Harz der Faserschläuche zu achten. In der Mehrzahl der Fälle wird der Innenfolienschlauch jedoch nach Aushärtung wieder entfernt. Grundsätzlich eigen sich unter Berücksichtigung dieser Kriterien Polyolefine wie Polyethylen oder Polypropylen, Polyamide, Polyester wie Polybutylenterephthalat, Polyethylenterephthalat oder Polyethylennaphthalat, Polyvinylchlorid, Polyacrylnitril oder auch thermoplastische Polyurethane oder Mischungen dieser Polymeren. Auch thermoplastische Elastomere sind grundsätzlich geeignet. Thermoplastische Elastomere sind Werkstoffe, bei denen elastische Polymerketten in thermoplastisches Material eingebunden sind. Trotz des Fehlens einer bei den klassischen Elastomeren erforderlichen Vulkanisation weisen thermoplastische Elastomere gummielastische Eigenschaften auf, was bei manchen Anwendungen vorteilhaft sein kann. Beispielhaft seien hier Polyolefin-Elastomere oder Polyamid-Elastomere genannt. Entsprechende Produkte sind in der Literatur beschrieben und von verschiedenen Herstellern kommerziell erhältlich, so dass sich hier detaillierte Angaben erübrigen.

Besonders geeignete und bevorzugte thermoplastische Kunststoffe sind beispielsweise Polyolefine und oder Polyamide, wobei Folienschläuche auf der Basis von Verbundfolien aus Polyolefinen und Polyamiden sich in bestimmten Anwendungsfällen als vorteilhaft erwiesen haben, da sie gegenüber dem meist als Lösungsmittel für die verwendeten Harze zum Einsatz kommenden Styrol eine bessere Sperrwirkung aufweisen als reine Polyethylenfolien. Damit kann der Austritt dieses Lösungsmittels/Monomers auf der Innenseite des Auskleidungsschlauchs vor der Aushärtung besser verhindert werden.

Gemäß einer bevorzugten Ausführungsform weist der innere Folienschlauchs eine Verstärkung auf. Diese wird so gewählt, dass man einerseits ein für den jeweiligen Anwendungsfall optimiertes Eigenschaftsprofil erhält und andererseits eine möglichst einfache Herstellung der Auskleidungsschläuche gegeben ist.

Besonders bevorzugt weist der innere Folienschlauch eine Verstärkung auf Faserbasis, insbesondere auf der Basis von Faserbändern wie vorstehend beschrieben, oder eines Vlieses auf.

Die Dicke der Verstärkung, beispielsweise der Vliese, liegt vorteilhaft im Bereich von 0,001 bis 10 mm, besonders bevorzugt im Bereich von 0,02 bis 5 mm.

Gemäß einer besonders bevorzugten Ausführungsform handelt es sich bei der Verstärkung auf Faserbasis um ein Glasfasergewebe oder ein Glasfasergelege.

Gemäß einer weiteren bevorzugten Ausführungsform weist der innere Folienschlauch eine Vlieskaschierung auf.

Bei der Kaschierung wird die Verstärkung mit der Folie, die die Grundlage für den inneren Folienschlauch bildet, physikalisch verbunden. Ein Beispiel hierfür ist die Aufkaschierung der Verstärkung auf die Folie, die zu einem partiellen Aufschmelzen der Folie führt. Entsprechende Verfahren zur Kaschierung sind dem Fachmann bekannt und in der Literatur beschrieben, so dass sich hier detaillierte Ausführungen erübrigen.

Im allgemeinen, ohne jedoch darauf beschränkt zu sein, weist die Flachfolie, aus der der innere Folienschlauch in der bevorzugten Ausführungsform gebildet wird, eine Dicke im Bereich von 40 bis 800 µm, vorzugsweise im Bereich von 50 bis 500 µm und besonders bevorzugt von 80 bis 200 µm auf.

Soll die Aushärtung nach dem Einbringen in das zu sanierende Leitungssystem durch Belichtung erfolgen, ist darauf zu achten, dass die verwendeten Materialien (sowohl für die Flachfolie, aus welcher der Innenfolienschlauch gebildet wird als auch für das Folienband) für das zur Bestrahlung verwendete Licht ausreichend durchlässig sind, um die Aushärtung nicht zu beeinträchtigen oder zu verhindern. Bei der thermischen Aushärtung ist dieses nicht von Bedeutung.

Weiterhin weisen die erfindungsgemäßen Auskleidungsschläuche mindestens einen äußeren Folienschlauch auf der Basis eines thermoplastischen Kunststoffs auf.

Geeignete äußere Folienschläuche zur Verwendung in den erfindungsgemäßen Auskleidungsschläuchen sind bekannt und in der Literatur beschrieben. Beispielhaft sei hier auf die bereits erwähnten WO95/04646 und die WO 00/73692 verwiesen, wobei die verstärkten äußeren Folienschläuche gemäß der WO 00/73692 eine bevorzugte Ausführungsform darstellen.

Grundsätzlich sollte der mindestens eine äußere Folienschlauch einen Lichtschutz liefern (um im Falle photochemischer Härtung eine vorzeitige und unerwünschte Aushärtung zu verhindern) und darüber hinaus das Austreten von Harz aus den harzgetränkten Faserschläuchen in das zu sanierende Leitungssystem verhindern. Insbesondere bei im Erdreich verlegten zu sanierenden Leitungssystemen ist dies in der Regel schon aus Aspekten des Umweltschutzes gewünscht bzw. erforderlich. Vorteilhaft ist auch, wenn der äußere Folienschlauch einen gewissen Schutz vor mechanischer Beschädigung bietet, wenn der Auskleidungsschlauch in das zu sanierende Leitungssystem eingezogen wird und dabei Rauhigkeiten in der Oberfläche oder Bruchstellen die Gefahr einer mechanischen Beschädigung des Schlauches mit sich bringen.

Als Material für den mindestens einen äußeren Folienschlauch b) kommen prinzipiell alle thermoplastischen Kunststoffe, ggf. unter Berücksichtigung der vorstehend genannten individuellen Anforderungen im Einzelfall in Betracht. Der Fachmann wird den geeigneten thermoplastischen Kunststoff nach dem vorgegebenen Anforderungsprofil auswählen. Gleiches gilt für die Dicke und die etwaige Verwendung von Verstärkungsmaterialien für den äußeren Folienschlauch über die der Fachmann anhand des Einzelfalls entscheiden wird.

Der erfindungsgemäße Auskleidungsschlauch wird vorzugsweise erhalten durch das Wickeln von Faserbändern auf bzw. um den inneren Folienschlauch mit Hilfe eines Wickeldorns oder einer anderen geeigneten Vorrichtung.

Grundsätzlich ist es jedoch auch möglich, Faserschläuche durch Inanlagebringen der Längskanten von Flachfolien und Verbinden dieser Kanten in geeigneter Weise zu erhalten. Entsprechende Verfahren sind dem Fachmann bekannt und in der Literatur beschrieben.

Gemäß einer bevorzugten Ausführungsform wird der Auskleidungsschlauch erhalten durch das Wickeln von Faserbändern mit Hilfe einer Vorrichtung wie in der WO 95/04646 beschrieben.

Die übereinander gewickelten Faserbänder in den erfindungsgemäßen Auskleidungsschläuchen überlappen sich bei dieser Ausführungsform an ihren Kanten, z.B. um 5 bis 300 mm.

Der fertige Auskleidungsschlauch, der im allgemeinen 1 bis 1000 m, insbesondere 30 bis 300 m lang sein kann, wird bei der eigentlichen Leitungssanierung in das zu sanierende Leitungssystem eingeführt und dort z.B. mit Druckwasser oder vorzugsweise mit Luft aufgeblasen, so dass er sich eng an die Innenwand des zu sanierenden Leitungssystems anschmiegt. Schließlich wird das Harz durch heißes Wasser thermisch oder vorzugsweise mittels UV-Licht, wie es z.B. in EP-A 122 246 und DE-A 198 17 413 beschrieben ist, gehärtet.

Die erfindungsgemäßen Auskleidungsschläuche eigenen sich zur Sanierung fluidführender Systeme jeglicher Art und ermöglichen eine schnelle Sanierung unter Minimierung der Ausfallzeiten der Systeme, während diese außer Betrieb genommen werden müssen. Im Vergleich zum Austausch beschädigter Teile werden so Stillstandszeiten verringert. Besonders vorteilhaft können die erfindungsgemäßen Auskleidungsschläuche zur Sanierung solcher Systeme eingesetzt werden, die für eine klassische Reparatur oder Sanierung unter Austausch von Teilen nur schwer zugänglich sind, weil diese beispielsweise Bestandteile einer Gesamtvorrichtung sind oder weil diese unzugänglich sind, z.B. weil sie im Erdreich verlegt sind. Als Beispiele seien hier Leitungssysteme zum Transport von Wasser oder Abwässern genannt, die in Städten und Kommunen im Erdreich und häufig unter Straßen oder anderen Verkehrswegen verlegt sind. Bei der Sanierung durch Austausch müssen diese Rohrleitungen durch entsprechende Erdarbeiten erst freigelegt werden und die Verkehrswege sind über längere Zeiträume dem Verkehr nicht zugänglich, was insbesondere bei höherem Verkehrsaufkommen zu erheblichen Beeinträchtigungen führt. Im Vergleich dazu kann die Sanierung solcher Leitungssysteme mit den erfindungsgemäßen Auskleidungsschläuchen ohne Erdarbeiten in wenigen Stunden oder Tagen ohne umfangreiche Erdarbeiten durchgeführt werden.

Die Nanopartikel in den zur Tränkung verwendeten Reaktionsharzen führen zu einer Verbesserung der Oberflächenstruktur der Seite des Auskleidungsschlauchs, die nach Entfernen des ggf. vorhandenen inneren Folienschlauchs mit dem strömenden Medium in Kontakt steht, wodurch die Reibung und damit die abrasive Wirkung des strömenden Mediums verringert werden kann. Falls der innere Folienschlauch nicht entfernt wird, verbessern die Nanopartikel in demselben die Struktur der Oberfläche, die mit dem strömenden Medium in Berührung steht und verringern die Abrasion durch das strömende Medium. In diesem Fall ist es nicht zwingend erforderlich, dass das Harz, welches zur Tränkung des harzgetränkten Faserschlauchs verwendet wird, ebenfalls Nanopartikel enthält. Die gewünschte Verringerung der Abrasion wird bereits durch die Ausstattung durch die Ausstattung des inneren Folienschlauchs mit Nanopartikeln erreicht.

Des weiteren führt die Zugabe von Nanopartikeln zum zur Tränkung verwendeten Reaktionsharz zu einer Verbesserung der mechanischen Eigenschaften wie E-Modul oder Festigkeit.

Die Verwendung von Nanopartikeln im zur Tränkung verwendeten Harz hat weiterhin den Vorteil, dass die so erhaltenen Harze in der Regel eine sehr gute Durchlässigkeit für die zur Aushärtung verwendete Strahlung aufweisen, da die Teilchengröße der Nanopartikel geringer ist als die Wellenlänge der Strahlung. Dies erleichtert die gleichmäßige und vollständige Aushärtung der erfindungsgemäßen Auskleidungsschläuche im Vergleich zu Harzen, die größere Teilchen enthalten.

## Patentansprüche

1. Auskleidungsschlauch zur Sanierung fluidführender Systeme, enthaltend mindestens einen harzgetränkten Faserschlauch, einen verstärkten oder unverstärkten inneren Folienschlauch auf der dem fließenden Medium zugewandten Seite des harzgetränkten Faserschlauchs, wobei dem zur Tränkung verwendeten Harz oder dem inneren Folienschlauch 0,1 bis 40 Gew%, bezogen auf das Gesamtgewicht des Harzes bzw. das Gesamtgewicht des inneren Folienschlauchs, an Nanopartikeln zugesetzt sind, die zum Zeitpunkt der Einarbeitung in das zur Tränkung verwendete Harz eine mittlere Teilchengröße D₅₀ oder eine größte Dimension in einer Raumrichtung von weniger als 300 nm haben und der Auskleidungsschlauch einen äußeren Folienschlauch aufweist.

2. Auskleidungsschlauch nach Anspruch 1, wobei dem zur Tränkung verwendeten Harz 0,1 bis 40 Gew%, bezogen auf das Gesamtgewicht des Harzes, an Nanopartikeln zugesetzt sind.

3. Auskleidungsschlauch nach Anspruch 1 oder 2, wobei dem inneren Folienschlauch 0,1 bis 40 Gew%, bezogen auf das Gesamtgewicht des inneren Folienschlauchs, Nanopartikel zugesetzt sind.

4. Auskleidungsschlauch nach Anspruch 1 oder 2, **dadurch gekennzeichnet dass** die Nanopartikel zum Zeitpunkt der Einarbeitung in das zur Tränkung verwendete Harz eine mittlere Teilchengröße D₅₀ oder eine größte Dimension in einer Raumrichtung von 150 nm haben.

5. Auskleidungsschlauch nach einem der Ansprüche 1 bis 4, **dadurch gekennzeichnet, dass** als Harz ein ungesättigtes Polyesterharz oder ein Vinylesterharz enthalten ist.

6. Auskleidungsschlauch nach einem der Ansprüche 1 bis 5, **dadurch gekennzeichnet, dass** es sich bei dem Faserband um ein Gewebe, Gewirke, Gelege, Matte oder ein Vlies handelt.

7. Auskleidungsschlauch nach einem der Ansprüche 1 bis 6, **dadurch gekennzeichnet, dass** es sich bei dem Faserband um ein Glasfasergewebe oder ein Glasfasergelege handelt.

8. Auskleidungsschlauch nach einem der Ansprüche 1 bis 7, **dadurch gekennzeichnet, dass** es sich bei den Nanopartikeln um Metalloxide, Metallcarbonate, Metallsulfate, Wollastonit, Xonotlit, Sepiolit, Attapulgit, Palygorskit, oder Kohlenstoff-Nanoröhrchen handelt.

9. Auskleidungsschlauch nach Anspruch 8, **dadurch gekennzeichnet, dass** es sich bei den Nanopartikeln um Kohlenstoff-Nanoröhrchen handelt.

10. Auskleidungsschlauch nach einem der Ansprüche 1 bis 9, **dadurch gekennzeichnet, dass** der innere Folienschlauch eine Verstärkung aufweist.

11. Verwendung der Auskleidungsschläuche nach einem der Ansprüche 1 bis 10 zur Sanierung von Wasser- und Abwasser-Leitungssystemen.

## Claims

1. Lining tube for renovation of fluid-conducting systems, comprising at least one resin-impregnated fibre tube, a reinforced or unreinforced inner film tube on the side of the resin-impregnated fibre tube facing the flowing medium, wherein 0.1% to 40% by weight, based on the total weight of the resin or the total weight of the inner film hose, of nanoparticles has been added to the resin used for impregnation or to the inner film tube, and said nanoparticles at the time of incorporation into the resin used for impregnation have a median particle size D₅₀ or a greatest dimension in any special direction of less than 300 nm, and the lining tube has an outer film tube.

2. Lining tube according to Claim 1, wherein 0.1% to 40% by weight, based on the total weight of the resin, of nanoparticles has been added to the resin used for impregnation.

3. Lining tube according to Claim 1 or 2, wherein 0.1% to 40% by weight, based on the total weight of the inner film tube, of nanoparticles has been added to the inner film tube.

4. Lining tube according to Claim 1 or 2, **characterized in that** the nanoparticles at the time of incorporation into the resin used for impregnation have a median particle size D₅₀ or a greatest dimension in any special direction of 150 nm.

5. Lining tube according to any of Claims 1 to 4, **characterized in that** the resin present is an unsaturated polyester resin or a vinyl ester resin.

6. Lining tube according to any of Claims 1 to 5, **characterized in that** the fibre band is a weave, knit, scrim, mat or nonwoven.

7. Lining tube according to any of Claims 1 to 6, **characterized in that** the fibre band is a glass fibre weave or a glass fibre scrim.

8. Lining tube according to any of Claims 1 to 7, **characterized in that** the nanoparticles are metal oxides, metal carbonates, metal sulfates, wollastonite, xonotlite, sepiolite, attapulgite, palygorskite, or carbon nanotubes.

9. Lining tube according to Claim 8, **characterized in that** the nanoparticles are carbon nanotubes.

10. Lining tube according to any of Claims 1 to 9, **characterized in that** the inner film tube has reinforcement.

11. Use of the lining tubes according to any of Claims 1 to 10 for renovation of water and wastewater conduit systems.

## Revendications

1. Tuyau de chemisage destiné à la rénovation de systèmes conduisant des fluides, contenant au moins un tuyau de fibres imprégné de résine, un tuyau de film intérieur renforcé ou non renforcé sur le côté, tourné vers le milieu en écoulement, du tuyau de fibres imprégné de résine, dans lequel 0,1 à 40 % en poids, par rapport au poids total de la résine ou au poids total du tuyau de film intérieur, de nanoparticules sont ajoutées à la résine utilisée pour l'imprégnation ou au tuyau de film intérieur, qui ont au moment de l'incorporation dans la résine utilisée pour l'imprégnation une taille de particule moyenne D₅₀ ou une dimension maximale dans une direction de l'espace de moins 300 nm, et le tuyau de chemisage comprend un tuyau de film extérieur.

2. Tuyau de chemisage selon la revendication 1, dans lequel 0, 1 à 40 % en poids, par rapport au poids total de la résine, de nanoparticules sont ajoutées à la résine utilisée pour l'imprégnation.

3. Tuyau de chemisage selon la revendication 1 ou 2, dans lequel 0,1 à 40 % en poids, par rapport au poids total du tuyau de film intérieur, de nanoparticules sont ajoutées au tuyau de film intérieur.

4. Tuyau de chemisage selon la revendication 1 ou 2, **caractérisé en ce que** les nanoparticules ont au moment de l'incorporation dans la résine utilisée pour l'imprégnation une taille de particule moyenne D₅₀ ou une dimension maximale dans une direction de l'espace de 150 nm.

5. Tuyau de chemisage selon l'une quelconque des revendications 1 à 4, **caractérisé en ce qu'**une résine de polyester insaturée ou une résine d'ester de vinyle est contenue en tant que résine.

6. Tuyau de chemisage selon l'une quelconque des revendications 1 à 5, **caractérisé en ce que** la bande de fibres consiste en un tissu, un tricot, une nappe, un mat ou un non-tissé.

7. Tuyau de chemisage selon l'une quelconque des revendications 1 à 6, **caractérisé en ce que** la bande de fibres consiste en un tissu de fibres de verre ou une nappe de fibres de verre.

8. Tuyau de chemisage selon l'une quelconque des revendications 1 à 7, **caractérisé en ce que** les nanoparticules consistent en des oxydes de métaux, des carbonates de métaux, des sulfates de métaux, de la wollastonite, de la xonotlite, de la sépiolite, de l'attapulgite, de la palygorskite ou des nanotubes de carbone.

9. Tuyau de chemisage selon la revendication 8, **caractérisé en ce que** les nanoparticules consistent en des nanotubes de carbone.

10. Tuyau de chemisage selon l'une quelconque des revendications 1 à 9, **caractérisé en ce que** le tuyau de film intérieur comprend un renforcement.

11. Utilisation des tuyaux de chemisage selon l'une quelconque des revendications 1 à 10 pour la rénovation de systèmes de conduction d'eau et d'eau usée.
